# EUROPEAN PATENT APPLICATION

(11) **EP 4 561 219 A1**
(43) Date of publication of application: **28.05.2025**
(21) Application number: 22951559.8
(22) Date of filing: 21.07.2022
(51) Int. Cl.: H04W 72/04

(54) **TCI STATE INDICATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/107200
(87) International publication number: WO 2024/016286

(57) **Abstract**

The present application relates to the field of mobile communications, and discloses a TCI state indication method and apparatus, and a storage medium. The method comprises: a terminal receiving first indication information sent by a network device, wherein the first indication information is used for indicating n TCI states, the n TCI states comprise a joint TCI state and/or an uplink TCI state, and n is a positive integer; receiving second indication information sent by the network device, wherein the second indication information is used for indicating a transmission parameter of a PUSCH; and according to the second indication information, determining m TCI states, wherein the m TCI states are a subset of the n TCI states, and m is a positive integer that is not greater than n. The present application realizes dynamic confirmation of the TCI state of a PUSCH, thereby improving the transmission flexibility of the PUSCH based on the TCI state.

## Description

### TECHNICAL FIELD

The present application relates to the field of mobile communication, and in particular, to a method for transmission configuration indication (TCI) state indication, an apparatus, and a storage medium.

### BACKGROUND

In a new radio (NR) system, uplink transmission or downlink transmission may be performed between a network device and a terminal based on a beam.

Specifically, the network device may indicate a TCI state for downlink, the beam indicated by the TCI state is used for performing downlink transmission. If the network device indicates a TCI state for uplink, the beam indicated by the TCI state is used for performing uplink transmission. If the network device indicates a joint TCI state, the beam indicated by the joint TCI state is used for the terminal to perform uplink transmission and downlink transmission.

However, the above solution is only applicable to the case of a single transmission reception point (S-TRP).

### SUMMARY

According to embodiments of the present application, there is provided a method for TCI state indication, an apparatus, and a storage medium, in which a method for dynamically determining a TCI state of a PUSCH channel is realized, thus improving transmission flexibility of the PUSCH based on the TCI state. The technical solution is as follows:

According to a first aspect of the present application, there is provided a method for TCI state indication, performed by a terminal, and including:
receiving first indication information sent by a network device, where the first indication information is used for indicating n TCI states, the n TCI states include joint TCI state(s) and/or uplink TCI state(s), and n is a positive integer;
receiving second indication information sent by the network device, where the second indication information is used for indicating transmission parameter(s) of a physical uplink shared channel (PUSCH); and
determining m TCI states according to the second indication information, where the m TCI states are a subset of the n TCI states, and m is a positive integer not greater than n.

According to a second aspect of the present application, there is provided a method for TCI state indication, performed by a network device, and including:
sending first indication information to a terminal, where the first indication information is used for indicating n TCI states, the n TCI states include joint TCI state(s) and/or uplink TCI state(s), and n is a positive integer; and
sending second indication information to the terminal, where the second indication information is used for indicating transmission parameter(s) of a PUSCH;
where the second indication information is further used by the terminal to determine m TCI states, the m TCI states are a subset of the n TCI states, and m is a positive integer not greater than n.

According to a third aspect of the present application, there is provided an apparatus for TCI state indication, where the apparatus includes:
a receiving module, configured to receive first indication information sent by a network device, where the first indication information is used for indicating n TCI states, the n TCI states include joint TCI state(s) and/or uplink TCI state(s), and n is a positive integer;
where the receiving module is further configured to receive second indication information sent by the network device, and the second indication information is used for indicating transmission parameter(s) of a PUSCH; and
a processing module, configured to determine m TCI states according to the second indication information, where the m TCI states are a subset of the n TCI states, and m is a positive integer not greater than n.

According to a fourth aspect of the present application, there is provided an apparatus for TCI state indication, including:
a sending module, configured to send first indication information to a terminal, where the first indication information is used for indicating n TCI states, the n TCI states include joint TCI state(s) and/or uplink TCI state(s), and n is a positive integer;
where the sending module is further configured to send second indication information to the terminal, and the second indication information is used for indicating transmission parameter(s) of a PUSCH; and
the second indication information is further used by the terminal to determine m TCI states, the m TCI states are a subset of the n TCI states, and m is a positive integer not greater than n.

According to a fifth aspect of the present disclosure, there is provided a terminal including: a processor; a transceiver, connected to the processor; and a memory, configured to store an executable instruction of the processor, where the processor is configured to load and execute the executable instruction to implement the method for TCI state indication according to the first aspect or the second aspect.

According to a sixth aspect of the present application, there is provided a network device including: a processor; a transceiver, connected to the processor, and a memory configured to store an executable instruction of the processor, where the processor is configured to load and execute the executable instruction to implement the method for TCI state indication according to the first aspect or the second aspect.

According to a seventh aspect of the present application, there is provided a communication system including a terminal and a network device; the terminal is configured to implement the method for TCI state indication according to the first aspect; and the network device is configured to implement the method for TCI state indication according to the second aspect.

According to an eighth aspect of the present application, there is provided a computer-readable storage medium, where executable program code is stored in a readable storage medium, and the executable program code is loaded and executed by a processor to implement the method for TCI state indication according to the first aspect or the second aspect.

According to a ninth aspect of the present application, there is provided a chip including a programmable logic circuit and/or a program instruction; and when the chip runs on a terminal or a network device, the chip is configured to implement the method for TCI state indication according to the first aspect or the second aspect.

According to a tenth aspect of the present application, there is provided a computer program product; and when the computer program product is executed by a processor of a terminal or a network device, the computer program product is configured to implement the method for TCI state indication according to the first aspect or the second aspect.

In the solution provided in the embodiments of the present application, in a case that the terminal receives first indication information for indicating a plurality sets of TCI states, the terminal further receives second indication information for indicating the transmission parameter(s) of the PUSCH, and the terminal may determine the TCI state for PUSCH transmission according to the transmission parameter(s) of the PUSCH, in which the method for dynamically determining the TCI state of the PUSCH channel, thus improving the transmission flexibility of the PUSCH based on the TCI state.

### BRIEF DESCRIPTION OF THE DRAWINGS

In order to more clearly illustrate the technical solutions in the embodiments of the present application, the accompanying drawings required to be used in the description of the embodiments are briefly described below. Obviously, the accompanying drawings in the following description are merely some embodiments of the present application, and for those of ordinary skill in the art, other drawings may be obtained according to these accompanying drawings without creative efforts.
FIG. 1 is a block diagram of a communication system provided according to an example embodiment of the present application;
FIG. 2 is a flowchart of a method for TCI state indication provided according to an example embodiment of the present application;
FIG. 3 is a block diagram of an apparatus for TCI state indication provided according to an example embodiment of the present application;
FIG. 4 is a block diagram of another apparatus for TCI state indication provided according to an example embodiment of the present application;
FIG. 5 is a schematic structural diagram of a communication device provided according to an example embodiment of the present application.

### DETAILED DESCRIPTION

To make the objectives, technical solutions, and advantages of the present application clearer, the implementations of the present application are further described in detail below with reference to the accompanying drawings.

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the present disclosure. By contrast, they are merely examples of apparatuses and methods consistent with some aspects of the present disclosure as detailed in the appended claims.

The terms used in the present application are for the purpose of describing particular embodiments only, and are not intended to limit the present application. As used in the present application and the appended claims, the singular forms "a" "said" and "the "are intended to include the plural forms as well, unless the context clearly indicates other meanings. It should also be understood that the term "and/or" as used here refers to and includes any or all possible combinations of one or more associated listed items.

It should be understood that although the terms "first", "second", "third", etc., may be used in the present application to describe various information, these information should not be limited to these terms. These terms are only used to distinguish the same type of information from each other. For example, without departing from the scope of the present application, the first information may also be referred to as second information, and similarly, the second information may also be referred to as first information. Depending on the context, for example, the word "if" used here may be interpreted as "at the time that... " or "when..." or "in response to determining... ".

It should be noted that the information (including but not limited to user equipment information, user personal information, etc.), data (including but not limited to data for analysis, stored data, displayed data, etc.) and signals involved in the present application are authorized by a user or fully authorized by various parties, and collection, use and processing of related data need to comply with relevant laws and regulations and standards of related countries and regions.

First, several terms provided in the embodiments of the present application are briefly introduced.

A TCI state is used for notifying a terminal of a quasi co-location (QCL) information or a spatial Rx parameter used when receiving a physical downlink control channel (PDCCH) and/or a demodulation reference signal (DMRS) of the PDCCH, where the QCL information or the spatial Rx parameter corresponds to QCL information or a spatial Rx parameter used when receiving a reference signal (synchronization signal block, SSB) or a channel state information reference signal (CSI-RS) sent by a base station. Alternatively, the TCI state is used for notifying the terminal of QCL information or a spatial Rx parameter used when receiving a physical downlink shared channel (PDSCH) and/or a DMRS of the PDSCH, where the QCL information or the spatial Rx parameter corresponds to QCL information or a spatial Rx parameter used when receiving a reference signal (synchronization signal block) or a channel state information reference signal sent by the base station.

Alternatively, the TCI state is used for notifying the terminal of QCL information or spatial relationship information or spatial filtering used when sending a physical uplink control channel (PUCCH) and/or a DMRS of the PUCCH, where the QCL information or spatial relationship information or spatial filtering corresponds to QCL information or spatial relationship information or spatial filtering used when sending which reference signal (such as an SRS) or receiving which SSB or CSI-RS sent by the base station. Alternatively, the TCI state is used for notifying the terminal of QCL information or spatial relationship information or spatial filtering used when sending the PUSCH and/or the DMRS of the PUSCH, where the QCL information or spatial relationship information or spatial filtering corresponds to QCL information or spatial relationship information or spatial filtering used when sending which reference signal (such as, an SRS) or receiving which SSB or CSI-RS sent by the base station.

A unified TCI state refers to that if the base station indicates a unified TCI state for downlink, the TCI state may be applicable to a PDSCH and a PDCCH of the terminal and some downlink reference signals. If the base station indicates a unified TCI state for uplink, the TCI state may be applicable to indicating a PUSCH and a PUCCH of the terminal and some uplink reference signals. Currently, the unified TCI state may employ a separate uplink TCI state and a separate downlink TCI state for separate indication, or may employ an uplink and downlink joint TCI state for joint indication.

The separate uplink TCI state is applicable to an uplink channel and/or an uplink signal, the separate downlink TCI state is applicable to a downlink channel and/or a downlink signal. The joint TCI state is applicable to an uplink channel and/or an uplink signal, and a downlink channel and/or a downlink signal, simultaneously.

The application scenario of the present application is described below.

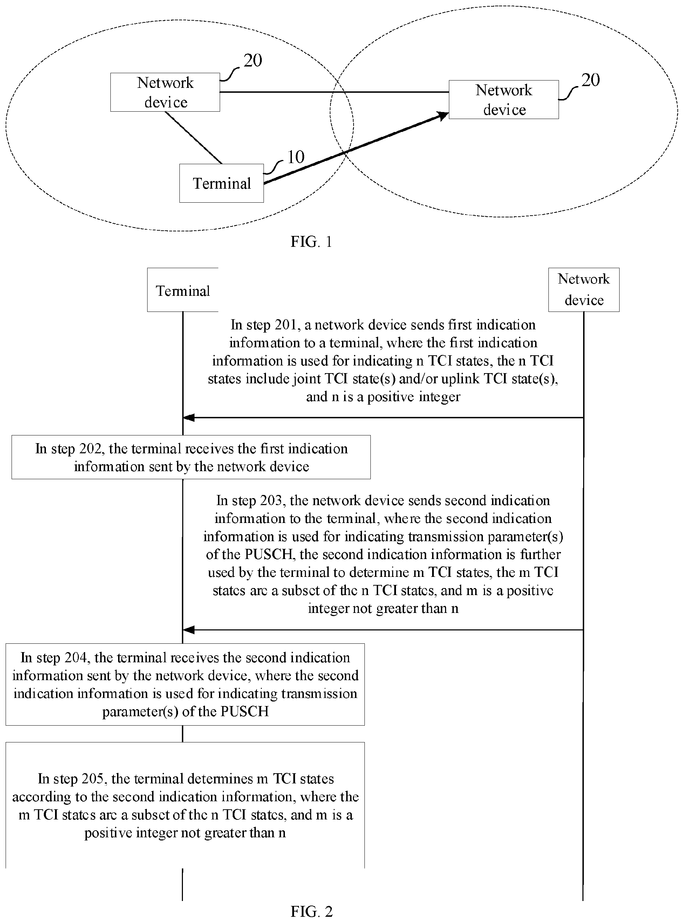

FIG. 1 is a block diagram of a communication system provided according to an example embodiment of the present application. The communication system may include a terminal 10 and a network device 20.

Generally, there are a plurality of terminals 10, and one or more terminal 10 terminals 10 may be distributed in a cell managed by each network device 20. The terminal 10 may include various handheld devices, vehicle-mounted devices, wearable devices, computing devices, or other processing devices connected to a wireless modem, and various forms of user equipment (UE), mobile stations (MS), or the like. For ease of description, in the embodiments of the present application, the foregoing devices are collectively referred to as terminals.

The network device 20 is an apparatus deployed in an access network to provide a wireless communication function for the terminal 10. For ease of description, in the embodiments of the present application, the foregoing apparatus that provides a wireless communication function for the terminal 10 is collectively referred to as a network device. A connection may be established between the network device 20 and the terminal 10 through an air interface, so as to perform communication through the connection, including signaling and data interaction. There may be a plurality of network devices 20, and two adjacent network devices 20 may also communicate with each other in a wired or wireless manner. The terminal 10 may hand over between different network devices 20, that is, a connection may be established between the terminal and different network devices 20.

The network device 20 may include various forms of macro base stations, micro base stations, relay stations, access points, or the like. In a system adopting different radio access technologies, names of devices with functions of the network device may be different. For example, in a 5G new radio (NR) system, it is referred to as a gNodeB or a gNB. With the evolution of communication technologies, the name of "network device" may change.

Optionally, the network device 20 is provided with at least two TRPs; or, for at least two network devices 20, each network device is provided with at least one TRP, that is, at least two network devices 20 are provided with at least two TRPs. That is, at least two TRPs may be from a same cell or different cells. Communication connection may be established between the terminal device 10 and at least two TRPs through a downlink TCI state and/or an uplink TCI state. Optionally, different downlink TCI states and/or uplink TCI states are used for different TRPs. For example, according to a joint TCI state or a downlink TCI state, the terminal device 10 determines a downlink TCI state that needs to be used for receiving the PDCCH and/or the DMRS of the PDCCH; and, according to a joint TCI state or an uplink TCI state, the terminal device 10 determines an uplink TCI state that needs to be used for sending the PUSCH and/or the DMRS of the PUSCH.

The "5G NR system" in the embodiments of the present application may also be referred to as a 5G system or an NR system, and those skilled in the art may understand the meaning of the 5G system or the NR system. The technical solutions described in the embodiments of the present application may be applied to a 5G NR system, or may be applied to a subsequent evolution system of a 5G NR system.

In the new radio (NR) technology, especially when the communication frequency band is in the frequency range 2, due to the high attenuation of the high-frequency channel, in order to ensure the coverage range, beam-based sending and receiving need to be used.

FIG. 2 is a flowchart of a method for TCI state indication provided according to an example embodiment of the present application. For example, the method may be applied to the terminal and the network device shown in FIG. 1, and the method includes at least some of the following content.

In step 201, a network device sends first indication information to a terminal, where the first indication information is used for indicating n TCI states, the n TCI states include joint TCI state(s) and/or uplink TCI state(s), and n is a positive integer.

In step 202, the terminal receives the first indication information sent by the network device.

The first indication information is used for indicating n TCI states, and the TCI state includes joint TCI state(s) and/or uplink TCI state(s), where n is an integer greater than 1. That is, the first indication information is used for indicating information about a plurality of joint/uplink TCI states. That is, the first indication information is used for indicating a unified TCI state of an uplink channel and/or an uplink signal. Each TCI state in the n TCI states may be a joint TCI state or an uplink TCI state.

In the embodiments of the present application, the network device sends the first indication information to the terminal, and indicates the n TCI states through the first indication information. After receiving the first indication information sent by the network device, the terminal may determine the n TCI states configured by the network device for the terminal.

In step 203, the network device sends second indication information to the terminal, where the second indication information is used for indicating transmission parameter(s) of the PUSCH, the second indication information is further used by the terminal to determine m TCI states, the m TCI states are a subset of the n TCI states, and m is a positive integer not greater than n.

In step 204, the terminal receives the second indication information sent by the network device, where the second indication information is used for indicating transmission parameter(s) of the PUSCH.

In the embodiments of the present application, the network device sends the second indication information to the terminal, where the second indication information is used for indicating transmission parameter(s) of the PUSCH. After receiving the second indication information, the terminal may determine, based on the second indication information, the transmission parameter(s) for the terminal to perform the PUSCH.

It should be noted that, for the sending time of the first indication information and the sending time of the second indication information here, it may be that the sending time of the first indication information comes first, or the sending time of the second indication information comes first, or the sending time of the first indication information and the sending time of the second indication information comes simultaneously, which is not limited in the present application.

In step 205, the terminal determines m TCI states according to the second indication information, where the m TCI states are a subset of the n TCI states, and m is a positive integer not greater than n.

In the embodiments of the present application, the terminal receives the second indication information; and the terminal may further determine, based on the second indication information, m TCI states belonging to the n TCI states. Subsequently, the terminal may use the determined m TCI states when sending the PUSCH.

Specifically, the terminal determines the transmission parameter(s) of the PUSCH indicated by the second indication information; and the terminal may further determine the m TCI states from the n TCI states according to the transmission parameter(s) of the PUSCH indicated by the second indication information.

Among them, m is a positive integer not greater than n. That is, the m TCI states are the same as the n TCI states, or the m TCI states are a true subset of the n TCI states. That is, the m TCI states are all or part of the n TCI states. Each TCI state in the m TCI states may be a joint TCI state or an uplink TCI state.

In some embodiments, the PUSCH is a type 1 CG PUSCH. In other words, in the present application, the m TCI states determined based on the second indication information are used for transmission of the type 1 CG PUSCH.

In the solution provided in the embodiments of the present application, in a case that the terminal receives first indication information for indicating a plurality sets of TCI states, the terminal further receives second indication information for indicating the transmission parameter(s) of the PUSCH, and the terminal may determine the TCI state for PUSCH transmission according to the transmission parameter(s) of the PUSCH, in which a method for dynamically determining the TCI state of the PUSCH channel is realized, thus improving the transmission flexibility of the PUSCH based on the TCI state.

In the embodiment shown in FIG. 2, it is described that the second indication information is used for indicating transmission parameter(s) of the PUSCH. Specifically, the transmission parameter(s) of the PUSCH includes at least one of the following:
(1) path loss reference identification(s);
(2) sounding reference signal (SRS) resource indication(s);
(3) information about precoding and layer;
(4) SRS resource set(s); or
(5) power control parameter set(s).

On the basis of the embodiment shown in FIG. 2, the solution in which the terminal determines the m TCI states according to the transmission parameter(s) of the PUSCH indicated by the second indication information includes a plurality of solutions, and each solution is described below.

In some embodiments, if specified transmission parameter(s) of the PUSCH includes one parameter domain, the m TCI states include a first TCI state in the n TCI states, or the m TCI states include TCI state(s) corresponding to a first SRS resource set in a plurality of SRS resource sets.

In the embodiments of the present application, the terminal determines, based on a quantity of the parameter domain included in the specified transmission parameter(s) of the PUSCH, that the m TCI states include a TCI state in the n TCI states, which is a first TCI state in the n TCI states, or that the m TCI states includes TCI state(s) corresponding to a first SRS resource set in a plurality of SRS resource sets. In other words, if the specified transmission parameter(s) of the PUSCH indicated by the second indication information includes one parameter domain, it is determined that the m TCI states include one TCI state, and the one TCI state is a TCI state in the n TCI states. In this case, the value of m is 1.

In the embodiments of the present application, the terminal determines n TCI states based on the first indication information. If the specified transmission parameter(s) of the PUSCH includes one parameter domain, the terminal may determine the first TCI state in the n TCI states as the m TCI states.

Alternatively, the network device further configures a plurality of SRS resource sets for the terminal. The terminal may determine, according to a first SRS resource set in the plurality of SRS resource sets, the TCI state(s) corresponding to the first SRS resource set from the n TCI states as the m TCI states.

Optionally, the parameter domain included in the specified transmission parameter(s) of the PUSCH actually corresponds to the TRP. Therefore, the quantity of the parameter domain included in the specified transmission parameter(s) of the PUSCH corresponds to a quantity of TPR.

In the embodiments of the present application, the specified transmission parameter(s) of the PUSCH includes one parameter domain, that is, corresponding to a TRP. In this case, it is a S-TRP transmission.

Optionally, if the specified transmission parameter(s) of the PUSCH is path loss reference identification(s), and the path loss reference identification(s) includes one parameter domain, that is, only including one path loss reference identification, it is determined that the m TCI states include the first TCI state in the n TCI states, or the m TCI states include the TCI state(s) corresponding to the first SRS resource set in the plurality of SRS resource sets. Alternatively, if the specified transmission parameter(s) of the PUSCH is SRS resource indication(s), and the SRS resource indication(s) includes one parameter domain, that is, only including one SRS resource indication, it is determined that the m TCI states include the first TCI state in the n TCI states, or the m TCI states include the TCI state(s) corresponding to the first SRS resource set in the plurality of SRS resource sets. Alternatively, if the specified transmission parameter(s) of the PUSCH is information about precoding and layer, and the information about precoding and layer includes one parameter domain, that is, only including one piece of information about precoding and layer, it is determined that the m TCI states include the first TCI state in the n TCI states, or the m TCI states include the TCI state(s) corresponding to the first SRS resource set in the plurality of SRS resource sets. Alternatively, if the specified transmission parameter(s) of the PUSCH is SRS resource set(s), and the SRS resource set(s) includes one parameter domain, that is, only including one SRS resource set, it is determined that the m TCI states include the first TCI state in the n TCI states, or the m TCI states include the TCI state(s) corresponding to the first SRS resource set in the plurality of SRS resource sets. Alternatively, if the specified transmission parameter(s) of the PUSCH is power control parameter set(s), and the power control parameter set(s) includes one parameter domain, that is, only including one power control parameter set, it is determined that the m TCI states include the first TCI state in the n TCI states, or the m TCI states include the TCI state(s) corresponding to the first SRS resource set in the plurality of SRS resource sets. Among them, the power control parameter set includes a 'p0-PUSCH-Alpha' and/or a 'powerControlLoopToUse'. That is, if the specified transmission parameter(s) of the PUSCH is the 'p0-PUSCH-Alpha', and the 'p0-PUSCH-Alpha' includes one parameter domain, that is, only including one 'p0-PUSCH-Alpha', it is determined that the m TCI states include the first TCI state in the n TCI states, or the m TCI states include the TCI state(s) corresponding to the first SRS resource set in the plurality of SRS resource sets. Alternatively, if the specified transmission parameter(s) of the PUSCH is the 'powerControlLoopToUse', and the 'powerControlLoopToUse' includes one parameter domain, that is, only including one 'powerControlLoopToUse', it is determined that the m TCI states include the first TCI state in the n TCI states, or the m TCI states include the TCI state(s) corresponding to the first SRS resource set in the plurality of SRS resource sets.

For example, taking n = 2 as an example, the terminal determines that the first SRS resource set corresponds to the first TCI state in the n TCI states. Alternatively, the terminal determines that the first SRS resource set corresponds to the second TCI state in the n TCI states.

In some other embodiments, if the specified transmission parameter(s) of the PUSCH includes x parameter domains, the m TCI states include x TCI states in the n TCI states, and x is a positive integer greater than 1.

In the embodiments of the present application, the terminal determines, according to the quantity of the parameter domain included in the specified transmission parameter(s) of the PUSCH, that the m TCI states include x TCI states in the n TCI states. In other words, if the specified transmission parameter(s) of the PUSCH indicated by the second indication information includes x parameter domains, it is determined that the m TCI states include x TCI states, and the x TCI states are x TCI states in the n TCI states. In this case, the value of m is x.

Optionally, the parameter domain included in the specified transmission parameter(s) of the PUSCH actually corresponds to the TRP. Therefore, the quantity of the parameter domain included in the specified transmission parameter(s) of the PUSCH corresponds to a quantity of TPR.

In the embodiments of the present application, the specified transmission parameter(s) of the PUSCH includes x parameter domains, that is, corresponding to x TRPs. Since x is a positive integer greater than 1, that is, corresponding to a plurality of TRPs. In this case, it is a Multi-TRP transmission.

Optionally, the x TCI states are TCI states respectively corresponding to the x SRS resource sets.

In the embodiments of the present application, the network device further configures a plurality of SRS resource sets for the terminal; and the terminal may determine, according to the plurality of SRS resource sets, TCI states corresponding to the x SRS resource sets from the n TCI states.

Optionally, if the specified transmission parameter(s) of the PUSCH is path loss reference identification(s), and the path loss reference identification(s) includes x parameter domains, that is, including x path loss reference identifications, it is determined that the m TCI states include x TCI states in the n TCI states. Alternatively, if the specified transmission parameter(s) of the PUSCH is SRS resource indication(s), and the SRS resource indication(s) includes x parameter domains, that is, including x SRS resource indications, it is determined that the m TCI states include x TCI states in the n TCI states. Alternatively, if the specified transmission parameter(s) of the PUSCH is information about precoding and layer, and the information about precoding and layer includes x parameter domains, that is, including x pieces of information about precoding and layer, it is determined that the m TCI states include x TCI states in the n TCI states. Alternatively, if the specified transmission parameter(s) of the PUSCH is SRS resource set(s), and the SRS resource set(s) includes x parameter domains, that is, including x SRS resource sets, it is determined that the m TCI states include x TCI states in the n TCI states. Alternatively, if the specified transmission parameter(s) of the PUSCH is power control parameter set(s), and the power control parameter set(s) includes x parameter domains, that is, including x power control parameter sets, it is determined that the m TCI states include x TCI states in the n TCI states. Among them, the power control parameter set includes a 'p0-PUSCH-Alpha' and/or a 'powerControlLoopToUse'. That is, if the specified transmission parameter(s) of the PUSCH is the 'p0-PUSCH-Alpha', and the 'p0-PUSCH-Alpha' includes x parameter domains, that is, including x 'p0-PUSCH-Alpha', it is determined that the m TCI states include x TCI states in the n TCI states. Alternatively, if the designated transmission parameter(s) of the PUSCH is the 'powerControlLoopToUse', and the 'powerControlLoopToUse' includes x parameter domains, that is, including x 'powerControlLoopToUse', it is determined that the m TCI states include x TCI states in the n TCI states.

For example, taking n = 2 as an example, the terminal determines that the TCI states respectively corresponding to the two SRS resource sets are the first TCI state and the second TCI state.

In some embodiments, in the embodiments of the present application, the terminal is configured with a plurality of SRS resource sets; and then, the terminal may determine a corresponding TCI state according to the configured plurality of SRS resource sets.

It should be noted that, in the embodiments of the present application, the m TCI states are related to PUSCH initial transmission. Among them, the solution in which the terminal determines the TCI state to be used according to the transmission parameter(s) of the second indication information, is for the initial transmission process. That is, the terminal determines the m TCI states by using the foregoing solution during PUSCH initial transmission. In some embodiments, the second indication information is a radio resource control (RRC) message.

In the following, how to use the determined m TCI states for repetition resources of the PUSCH in the initial transmission process is described. In some embodiments, in a case that it is determined that the m TCI states include the first TCI state, that is, the first TCI state is used for K repetition resources corresponding to the PUSCH, the first TCI state is used for all K continuous time domain units (time slots or each repetition unit), where K is a positive integer.

In a case that it is determined that the m TCI states include the second TCI state, that is, the second TCI state is used for the K repetition resources corresponding to the PUSCH, the second TCI state is used for all K continuous time domain units (time slots or each repetition unit).

In a case that it is determined that the m TCI states include the first TCI state and the second TCI state, it is determined that the first TCI state and the second TCI state are used for the K repetition resources corresponding to the PUSCH based on a mapping manner, and the mapping manner is cyclic mapping or sequential mapping. Among them, the mapping relationship is as follows.

When K = 2, the first time domain unit corresponds to the first TCI state, and the second time domain unit corresponds to the second TCI state.

When K > 2 and the manner of cyclic mapping is used, the first TCI state corresponds to an odd number of time domain unit such as the first time domain unit, the third time domain unit, the fifth time domain unit, or the like; and the second TCI state corresponds to an even number of time domain unit such as the second time domain unit, the fourth time domain unit, the sixth time domain unit, or the like.

When K > 2 and the manner of sequential mapping is used, the first TCI state corresponds to the (4i+1)^{th} time domain unit and the (4i+2)^{th} time domain unit; and the second TCI state corresponds to the (4i+3)^{th} time domain unit and the (4i+4)^{th} time domain unit, and i is an integer greater than or equal to 0. For example, the first TCI state corresponds to the first time domain unit and the second time domain unit, and the second TCI state corresponds to the third time domain unit and the fourth time domain unit; and then, the first TCI state corresponds to the fifth time domain unit and the sixth time domain unit, and the second TCI state corresponds to the seventh time domain unit and the eighth time domain unit, and so on.

It should be noted that, the K repetition resources being time domain units are used as an example here, but they are not limited to time domain units. The time domain unit may be replaced with a frequency domain unit, a CDM group corresponding to a DMRS port, or the like. This is not limited in the present application.

In the solution provided in the embodiments of the present application, the terminal determines the TCI state to be used according to the quantity of the parameter domain included in the specified transmission parameter(s) of the PUSCH, in which the method for dynamically determining the TCI state of the PUSCH channel is realized, thus improving the flexibility of sending the PUSCH based on the TCI state.

In the embodiment shown in FIG. 2, it is described that the terminal determines m TCI states according to the second indication information. The determined m TCI states are related to PUSCH retransmission, and how to determine the m TCI states according to the second indication information is described below.

In some embodiments, the second indication information includes indication domain(s); and the terminal determines, based on the value(s) of the indication domain(s), that the m TCI states include at least one TCI state in the n TCI states.

In the embodiments of the present application, the indication domain(s) included in the second indication information may have different values. When the indication domain(s) is of different value(s), the terminal determines at least one TCI state from the n TCI states as the m TCI states.

Optionally, when the indication domain is the first value, it is determined that the m TCI states are the first TCI state in the n TCI states. When the indication domain is the second value, it is determined that the m TCI states are the first TCI state in the n TCI states. When the indication domain is the third value, it is determined that the m TCI states are the first TCI state and the second TCI state in the n TCI states. Among them, the first value, the second value, and the third value are different values.

In some embodiments, the indication domain(s) includes at least one of the following:
SRS resource set indication(s); or
TCI state indication domain(s).

In other words, the indication domain(s) in the second indication information includes SRS resource set indication(s), or includes TCI state indication domain(s), or includes SRS resource set indication(s) and TCI state indication domain(s).

Optionally, the second indication information is downlink control information (DCI) information. For example, the DCI format of the DCI information is 0_1 or 0_2.

In some embodiments, it is described by taking that the indication domain in the second indication information is an SRS resource set indication, and the value of n is 2, that is, the n TCI states include two TCI states as an example.

For example, when the SRS resource set indication is the first value, it is determined that the m TCI states include the first TCI state in the n TCI states; or when the SRS resource set indication is the second value, it is determined that the m TCI states include the second TCI state in the n TCI states; or when the SRS resource set indication is the third value, it is determined that the m TCI states include the first TCI state and the second TCI state in the n TCI states.

In some embodiments, when the SRS resource set indication is the third value, it is determined that the first TCI state and the second TCI state are used for the K repetition resources corresponding to the PUSCH based on a mapping manner, and the mapping manner is cyclic mapping or sequential mapping. Among them, K is a positive integer.

For example, the time domain repetition is used as an example to describe a possible TCI state indication manner. Since 2 bits may be used for the SRS resource set indication domain, that is, the SRS resource set indication may have four values of 0, 1, 2, and 3. Among them, the first value includes a value 0, the second value includes a value 1, and the third value includes a value 2 and/or a value 3.
(1) In a case that the value of the SRS resource set indication is 0, that is, the SRS resource set indication is the first value, then, the first TCI state is used for the K repetition resources corresponding to the PUSCH, that is, the first TCI state is used for all K continuous time domain units (time slots or each repetition unit).
(2) In a case that the value of the SRS resource set indication is 1, that is, the SRS resource set indication is the second value, then, the second TCI state is used for the K repetition resources corresponding to the PUSCH, that is, the second TCI state is used for all K continuous time domain units (time slots or each repetition unit).
(3) In a case that the value of the SRS resource set indication is 2, that is, the SRS resource set indication is the third value, the first TCI state and the second TCI state are used for the K repetition resources corresponding to the PUSCH based on a mapping manner, and the mapping manner is cyclic mapping or sequential mapping. Among them, the mapping relationship is as follows:
   When K = 2, the first time domain unit corresponds to the first TCI state, and the second time domain unit corresponds to the second TCI state.
   When K > 2 and the manner of cyclic mapping is used, the first TCI state corresponds to an odd number of time domain unit such as the first time domain unit, the third time domain unit, the fifth time domain unit, or the like; and the second TCI state corresponds to an even number of time domain unit such as the second time domain unit, the fourth time domain unit, the sixth time domain unit, or the like.
   When K > 2 and the manner of sequential mapping is used, the first TCI state corresponds to the (4i+1)^{th} time domain unit and the (4i+2)^{th} time domain unit; and the second TCI state corresponds to the (4i+3)^{th} time domain unit and the (4i+4)^{th} time domain unit, and i is an integer greater than or equal to 0. For example, the first TCI state corresponds to the first time domain unit and the second time domain unit, and the second TCI state corresponds to the third time domain unit and the fourth time domain unit; and then, the first TCI state corresponds to the fifth time domain unit and the sixth time domain unit, and the second TCI state corresponds to the seventh time domain unit and the eighth time domain unit, and so on.
(4) In a case that the value of the SRS resource set indication is 3, that is, the SRS resource set indication is the third value, the first TCI state and the second TCI state are used for the K repetition resources corresponding to the PUSCH based on a mapping manner, and the mapping manner is cyclic mapping or sequential mapping. Among them, the mapping relationship is as follows.

When K = 2, the first time domain unit corresponds to the second TCI state, and the second time domain unit corresponds to the first TCI state.

When K > 2 and the manner of cyclic mapping is used, the first TCI state corresponds to an even number of time domain unit such as the second time domain unit, the fourth time domain unit, the sixth time domain unit, or the like; and the second TCI state corresponds to an odd number of time domain unit such as the first time domain unit, the third time domain unit, the fifth time domain unit, or the like.

When K > 2 and the manner of sequential mapping is used, the second TCI state corresponds to the (4i+1)^{th} time domain unit and the (4i+2)^{th} time domain unit; and the first TCI state corresponds to the (4i+3)^{th} time domain unit and the (4i+4)^{th} time domain unit, and i is an integer greater than or equal to 0. For example, the second TCI state corresponds to the first time domain unit and the second time domain unit, and the first TCI state corresponds to the third time domain unit and the fourth time domain unit; and then, the second TCI state corresponds to the fifth time domain unit and the sixth time domain unit, and the first TCI state corresponds to the seventh time domain unit and the eighth time domain unit, and so on.

It should be noted that, the K repetition resources being time domain units are used as an example here, but they are not limited to time domain units. The time domain unit may be replaced with a frequency domain unit, a CDM group corresponding to a DMRS port, or the like. This is not limited in the present application.

It should be noted that, in the conventional method, there is no TCI state indication domain in the uplink DCI with the DCI format of 0_1 or 0_2. In order to indicate the m TCI states used during PUSCH transmission, in some embodiments, a TCI state indication domain may also be added to the uplink DCI with the DCI format of 0_1 or 0_2, for indicating the second indication information.

Based on the embodiment shown in FIG. 2, the PUSCH is configured with any one of the following:
a transmission method based on time division multiplexing (TDM);
a transmission method based on frequency division multiplexing (FDM);
a demodulation reference signal (DMRS) port for at least two code division multiplexing (CDM) groups; and
a transmission method based on a single frequency network (SFN).

Optionally, the transmission method based on FDM refers to that frequency domain resources for n PUSCH occasions used for transmitting the PUSCH are different, and TCI states of the n PUSCH occasions are different. The method based on FDM includes FDM method A, or FDM method B. FDM method A refers to that when a terminal is indicated with a plurality of TCI states, the terminal uses different TCI states to transmit a PUSCH on one PUSCH occasion on non-overlapping frequency domain resources. FDM method B refers to that when a terminal is indicated with a plurality of TCI states, the terminal uses different TCI states to transmit PUSCHs on a plurality of PUSCH occasions on non-overlapping frequency domain resources respectively. In an example case of FDM method B, both the quantity of the TCI state and the quantity of the PUSCH occasion are 2.

Optionally, the transmission method based on TDM refers to that time domain resources for n PUSCH occasions used for transmitting the PUSCH are different, and the TCI states of the n PUSCH occasions are different. The transmission method based on TDM includes repetition type A, or repetition type B. In the repetition type A, different time domain units are located at the same symbol positions in different time slots; and, in the repetition type B, one time slot may include two time domain units, and one time domain unit may also occupy at least some symbols of the two time slots.

Optionally, the DMRS port for transmitting the PUSCH corresponds to at least two CDM groups, and TCI states corresponding to the at least two CDM groups are different.

Optionally, the transmission method based on SFN includes a SFN method A or a SFN method B. In the SFN method, the TCI state used for transmitting the PUSCH includes at least two TCI states, and each TCI state includes a joint TCI state or an uplink TCI state. In the case that the transmission of the PUSCH is configured as the transmission method based on SFN, the SFN may also be dynamically handed over to the transmission of the S-TRP; that is, if the quantity of the TCI state is greater than 1, the transmission based on SFN is performed, otherwise, the transmission is dynamically handed over to the transmission of the S-TRP. Optionally, the time domain resource and the frequency domain resource used for transmitting the PUSCH are the same, and the DMRS ports of the demodulation reference signal for transmitting the PUSCH are the same.

In SFN method A, if at least two TCI states are indicated, the terminal assumes that the DMRS port for transmitting the PUSCH is quasi co-located with the reference signal corresponding to the at least two TCI states. In SFN method B, if at least two TCI states are indicated, the terminal assumes that the DMRS port for transmitting the PUSCH is quasi co-located with the reference signal corresponding to the at least two TCI states, except for the quasi co-location parameter of the second TCI state: {Doppler shift, Doppler spread}.

Based on the embodiment shown in FIG. 2, there are a plurality of manners in which the network device indicates the n TCI states through the first indication information, and each manner is described below.

In some embodiments, the first indication information is carried in a first medium access control control element (MAC CE), and the first MAC CE is used for indicating n TCI states.

Optionally, the first MAC CE is used for indicating n TCI states corresponding to one code point in a TCI domain of the downlink control information (DCI). That is, only the first MAC CE is sent, but the DCI is not sent. The n TCI states indicated in the first MAC CE only correspond to one code point of the TCI domain in the DCI, so that the base station does not need to additionally send the DCI to the terminal to indicate the code point, thus saving signaling overheads.

In some embodiments, the first indication information is carried in the second MAC CE and the first DCI. The second MAC CE is used for indicating n TCI states respectively corresponding to at least two code points in the TCI domain of the first DCI, and the first DCI is used for indicating one of the at least two code points. That is, the second MAC CE and the first DCI are simultaneously used for indicating the first indication information. The second MAC CE indicates n TCI states respectively corresponding to at least two code points in the TCI domain of the first DCI, the first DCI is used for indicating a code point, and then the n TCI states corresponding to the code point are obtained by querying the second MAC CE. In this case, the second MAC CE may indicate a plurality of sets of code point configurations, and each set of code point configurations corresponds to n TCI states. It should be noted that each code point corresponds to n TCI states, and the value n corresponding to each code point may be the same or different.

In some embodiments, the first indication information further includes identification information corresponding to each TCI state. The identification information is control resource set pool index(es) (CORESETPoolIndex), or control resource set group identity(s) (CORESET group ID ), or control resource set identity(s) (CORESET ID), or search space set group ID(s) (SS set group ID), or search space set identity(s) (SS set ID), or PDCCH group identity(s) or PUSCH group identity(s); or, each TCI state in the n TCI states is provided with a default mapping relationship with any one of the identification information.

That is, in one case, each TCI state in the n TCI states is provided with a default mapping relationship with the identification information, and the first indication information does not need to additionally indicate a correspondence between the TCI state and the identification information. In another case, the TCI state is not provided with a default mapping relationship with the identification information, and therefore, the first indication information further includes a correspondence between each TCI state and the identification information.

In some embodiments, the second indication information corresponds to at least one bandwidth part identity (BWP ID) and/or at least one component carrier identity (CC ID).

Furthermore, in a case that the CC ID is a CC ID in the CC list, the m TCI states are applicable to all BWPs on all CCs in the CC list; that is, the BWP ID may be ignored. Among them, the CC list is a list configured by the network device.

In some embodiments, the at least one BWP ID corresponding to the m TCI states is the same as the BWP ID(s) corresponding to the n TCI states; or, the at least one CC ID corresponding to the m TCI states is the same as the CC ID(s) corresponding to the n TCI states; or, the at least one BWP ID and the at least one CC ID corresponding to the m TCI states are the same as the BWP ID(s) and the CC ID(s) corresponding to the n TCI states.

It should be noted that the foregoing embodiments may be divided into new embodiments, or may be combined with other embodiments into a new embodiment, which is not limited in the present application.

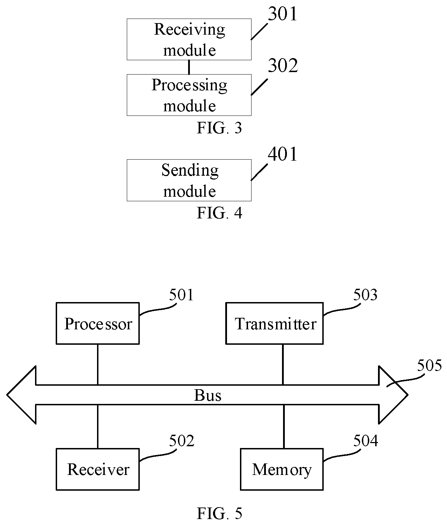

FIG. 3 is a block diagram of an apparatus for TCI state indication provided according to an example embodiment of the present application. Referring to FIG. 3, the apparatus includes a receiving module 301 and a processing module 302.

The receiving module 301 is configured to receive first indication information sent by a network device, where the first indication information is used for indicating n TCI states, the n TCI states include joint TCI state(s) and/or uplink TCI state(s), and n is a positive integer.

The receiving module 301 is further configured to receive second indication information sent by the network device, where the second indication information is used for indicating transmission parameter(s) of a PUSCH.

The processing module 302 is configured to determine m TCI states according to the second indication information, where the m TCI states are a subset of the n TCI states, and m is a positive integer not greater than n.

In some embodiments, the transmission parameter(s) of the PUSCH includes at least one of the following:
path loss reference identification(s);
SRS resource indication(s);
information about precoding and layer;
SRS resource set(s); or
power control parameter set(s).

In some embodiments, specified transmission parameter(s) of the PUSCH includes one parameter domain, and the m TCI states include a first TCI state in the n TCI states, or the m TCI states include TCI state(s) corresponding to a first SRS resource set in a plurality of SRS resource sets.

In some embodiments, the specified transmission parameter(s) of the PUSCH includes x parameter domains, the m TCI states include x TCI states in the n TCI states, and x is a positive integer greater than 1.

In some embodiments, the x TCI states are TCI states respectively corresponding to x SRS resource sets.

In some embodiments, the m TCI states are related to PUSCH initial transmission.

In some embodiments, the processing module 302 is further configured to determine, according to value(s) of the indication domain(s), that the m TCI states include at least one TCI state in the n TCI states.

In some embodiments, the indication domain(s) includes at least one of the following:
SRS resource set indication(s); or
TCI state indication domain(s).

In some embodiments, the m TCI states are related to PUSCH retransmission.

In some embodiments, the PUSCH is configured with any one of the following:
a transmission method based on time division multiplexing (TDM);
a transmission method based on frequency division multiplexing (FDM);
a demodulation reference signal (DMRS) port for at least two code division multiplexing (CDM) groups; and
a transmission method based on a single frequency network (SFN).

In some embodiments, the first indication information is carried in a first media access control control element (MAC CE), and the first MAC CE is used for indicating the n TCI states; or

The first indication information is carried in a second MAC CE and first DCI, the second MAC CE is used for indicating n TCI states respectively corresponding to at least two code points in a TCI domain of the first DCI, and the first DCI is used for indicating one of the at least two code points.

In some embodiments, the first indication information includes identification information corresponding to each TCI state, and the identification information is control resource set pool index(es), or control resource set group identity(s), or control resource set identity(s), or search space set group identity(s), or search space set identity(s), or physical downlink control channel (PDCCH) group identity(s) or PUSCH group identity(s); or

Each TCI state in the n TCI states is provided with a default mapping relationship with the identification information.

In some embodiments, the second indication information corresponds to at least one bandwidth part identity (BWP ID) and/or at least one component carrier identity (CC ID).

In some embodiments, in a case that the CC ID is a CC ID in a CC list, the m TCI states are applicable to all BWPs on all CCs in the CC list.

In some embodiments, at least one BWP ID corresponding to the m TCI states is the same as the BWP ID(s) corresponding to the n TCI states; or

At least one CC ID corresponding to the m TCI states is the same as the CC ID(s) corresponding to the n TCI states; or

The at least one BWP ID and the at least one CC ID corresponding to the m TCI states are the same as the BWP ID(s) and the CC ID(s) corresponding to the n TCI states.

It should be noted that, in the apparatus provided in the foregoing embodiment, when the functions of the apparatus are implemented, the division of the foregoing functional modules is only used for illustration; and in an actual application, the foregoing functions allocation may be completed by different functional modules according to needs; that is, the internal structure of the device is divided into different functional modules to complete all or some of the functions described above. In addition, the apparatus and method embodiments provided in the foregoing embodiments belong to the same concept, and specific implementation processes of the apparatus may refer to the method embodiments, and details are not described here again.

FIG. 4 is a block diagram of another apparatus for TCI state indication provided according to an example embodiment of the present application. Referring to FIG. 4, the apparatus includes a sending module 401.

The sending module 401 is configured to send first indication information to a terminal, where the first indication information is used for indicating n TCI states, the n TCI states include joint TCI state(s) and/or uplink TCI state(s), and n is a positive integer.

The sending module 401 is further configured to send second indication information to the terminal, where the second indication information is used for indicating transmission parameter(s) of a PUSCH.

The second indication information is further used by the terminal to determine m TCI states, where the m TCI states are a subset of the n TCI states, and m is a positive integer not greater than n.

In some embodiments, the transmission parameter(s) of the PUSCH includes at least one of the following:
path loss reference identification(s);
SRS resource indication(s);
information about precoding and layer;
SRS resource set(s); or
a power control parameter set.

In some embodiments, specified transmission parameter(s) of the PUSCH includes one parameter domain, and the m TCI states include a first TCI state in the n TCI states, or the m TCI states include TCI state(s) corresponding to a first SRS resource set in a plurality of SRS resource sets.

In some embodiments, the specified transmission parameter(s) of the PUSCH includes x parameter domains, the m TCI states include x TCI states in the n TCI states, and x is a positive integer greater than 1.

In some embodiments, the x TCI states are TCI states respectively corresponding to x SRS resource sets.

In some embodiments, the m TCI states are related to PUSCH initial transmission.

In some embodiments, the second indication information includes indication domain(s), the m TCI states include at least one TCI state in the n TCI states, and the least one TCI state is determined according to value(s) of the indication domain(s).

In some embodiments, the indication domain(s) includes at least one of the following:
SRS resource set indication(s); or
TCI state indication domain(s).

In some embodiments, the m TCI states are related to PUSCH retransmission.

In some embodiments, the PUSCH is configured with any one of the following:
a transmission method based on time division multiplexing (TDM);
a transmission method based on frequency division multiplexing (FDM);
a demodulation reference signal (DMRS) port for at least two code division multiplexing (CDM) groups; and
a transmission method based on a single frequency network (SFN).

In some embodiments, the first indication information is carried in a first media access control control element (MAC CE), and the first MAC CE is used for indicating the n TCI states; or

The first indication information is carried in a second MAC CE and first DCI, the second MAC CE is used for indicating n TCI states respectively corresponding to at least two code points in a TCI domain of the first DCI, and the first DCI is used for indicating one of the at least two code points.

In some embodiments, the first indication information includes identification information corresponding to each TCI state, and the identification information is control resource set pool index(es), or control resource set group identity(s), or control resource set identity(s), or search space set group identity(s), or search space set identity(s), or physical downlink control channel (PDCCH) group identity(s) or PUSCH group identity(s); or

The first indication information includes the n TCI states, and each TCI state in the n TCI states is provided with a default mapping relationship with the identification information.

In some embodiments, the second indication information corresponds to at least one bandwidth part identity (BWP ID) and/or at least one component carrier identity (CC ID).

In some embodiments, in a case that the CC ID is a CC ID in a CC list, the m TCI states are applicable to all BWPs on all CCs in the CC list.

In some embodiments, at least one BWP ID corresponding to the m TCI states is the same as the BWP ID(s) corresponding to the n TCI states; or

At least one CC ID corresponding to the m TCI states is the same as the CC ID(s) corresponding to the n TCI states; or

The at least one BWP ID and the at least one CC ID corresponding to the m TCI states are the same as the BWP ID(s) and the CC ID(s) corresponding to the n TCI states.

It should be noted that, in the apparatus provided in the foregoing embodiment, when the functions of the apparatus are implemented, the division of the foregoing functional modules is only used for illustration; and in an actual application, the foregoing functions allocation may be completed by different functional modules according to needs; that is, the internal structure of the device is divided into different functional modules to complete all or some of the functions described above. In addition, the apparatus and method embodiments provided in the foregoing embodiments belong to the same concept, and specific implementation processes of the apparatus may refer to the method embodiments, and details are not described here again.

FIG. 5 is a schematic structural diagram of a communication device provided according to an example embodiment of the present application. The communication device includes a processor 501, a receiver 502, a transmitter 503, a memory 504, and a bus 505.

The processor 501 includes one or more processing cores, and the processor 501 executes various functional applications and information processing by running software programs and modules.

The receiver 502 and the transmitter 503 may be implemented as a communication component, and the communication component may be a communication chip.

The memory 504 is connected to the processor 501 through the bus 505.

The memory 504 may be configured to store at least one program code, and the processor 501 is configured to execute the at least one program code, to implement steps in the foregoing method embodiments.

In addition, the communication device may be a terminal or a network device. The memory 1104 may be implemented by any type of volatile or non-volatile storage device or a combination of them, including but not limited to: a magnetic disk or optical disk, an electrically erasable programmable read-only memory (EEPROM), an erasable programmable read-only memory (EPROM), a static time access memory (SRAM), a read-only memory (ROM), a magnetic memory, a flash memory, and a programmable read-only memory (PROM).

In an example embodiment, there is further provided a communication system, where the communication system includes a communication device serving as a terminal and a communication device serving as a network device in the foregoing embodiment shown in FIG. 5.

In an example embodiment, there is further provided a computer-readable storage medium, where executable program code is stored in the readable storage medium, and the executable program code is loaded and executed by a processor to implement the method for TCI state indication performed by the communication device provided in the foregoing method embodiments.

In an example embodiment, there is provided a chip, where the chip includes a programmable logic circuit and/or a program instruction, and when the chip runs on a terminal or a network device, the chip is configured to implement the method for TCI state indication as provided in various method embodiments.

In an example embodiment, there is provided a computer program product, and when the computer program product is executed by a processor of a terminal or a network device, the computer program product is configured to implement the method for TCI state indication as provided in the foregoing method embodiments.

Those of ordinary skill in the art may understand that all or some of the steps in the foregoing embodiments may be completed by hardware, or may be completed by instructing related hardware through a program, where the program may be stored in a computer-readable storage medium, and the foregoing storage medium may be a read-only memory, a magnetic disk, an optical disk, or the like.

The foregoing descriptions are merely optional embodiments of the present application, and are not intended to limit the present application. Any modification, equivalent replacement, or improvement made without departing from the spirit and principle of the present application shall fall within the protection scope of the present application.

## Claims

1. A method for transmission configuration indication, TCI, state indication, performed by a terminal, and comprising:
receiving first indication information sent by a network device, wherein the first indication information is used for indicating n TCI states, the n TCI states comprise joint TCI state(s) and/or uplink TCI state(s), and n is a positive integer;
receiving second indication information sent by the network device, wherein the second indication information is used for indicating transmission parameter(s) of a physical uplink shared channel, PUSCH; and
determining m TCI states according to the second indication information, wherein the m TCI states are a subset of the n TCI states, and m is a positive integer not greater than n.

2. The method according to claim 1, wherein the transmission parameter(s) of the PUSCH comprises at least one of:
path loss reference identification(s);
sounding reference signal, SRS, resource indication(s);
information about precoding and layer;
SRS resource set(s); or
power control parameter set(s).

3. The method according to claim 2, wherein specified transmission parameter(s) of the PUSCH comprises one parameter domain, the m TCI states comprise a first TCI state in the n TCI states, or the m TCI states comprise TCI state(s) corresponding to a first SRS resource set in a plurality of SRS resource sets.

4. The method according to claim 2, wherein specified transmission parameter(s) of the PUSCH comprises x parameter domains, the m TCI states comprise x TCI states in the n TCI states, and x is a positive integer greater than 1.

5. The method according to claim 4, wherein the x TCI states are TCI states respectively corresponding to x SRS resource sets.

6. The method according to any one of claims 1 to 5, wherein the m TCI states are related to PUSCH initial transmission.

7. The method according to claim 1, wherein the second indication information comprises indication domain(s), and determining the m TCI states according to the second indication information comprises:
determining, according to value(s) of the indication domain(s), that the m TCI states comprise at least one TCI state in the n TCI states.

8. The method according to claim 7, wherein the indication domain(s) comprises at least one of:
SRS resource set indication(s); or
TCI state indication domain(s).

9. The method according to claim 7 or 8, wherein the m TCI states are related to PUSCH retransmission.

10. The method according to any one of claims 1 to 9, wherein the PUSCH is configured with any one of:
a transmission method based on time division multiplexing, TDM;
a transmission method based on frequency division multiplexing, FDM;
a demodulation reference signal, DMRS, port for at least two code division multiplexing, CDM, groups; and
a transmission method based on a single frequency network, SFN.

11. The method according to claim 1, wherein,
the first indication information is carried in a first media access control control element (MAC CE), and the first MAC CE is used for indicating the n TCI states; or
the first indication information is carried in a second MAC CE and first DCI, the second MAC CE is used for indicating n TCI states respectively corresponding to at least two code points in a TCI domain of the first DCI, and the first DCI is used for indicating one of the at least two code points.

12. The method according to claim 11, wherein,
the first indication information comprises identification information corresponding to each TCI state, and the identification information is control resource set pool index(es), or control resource set group, or control resource set identity(s), or search space set group identity(s), or search space set identity(s), or physical downlink control channel, PDCCH, group identity(s) or PUSCH group identity(s); or
each TCI state in the n TCI states is provided with a default mapping relationship with the identification information.

13. The method according to any one of claims 1 to 12, wherein,
the second indication information corresponds to at least one bandwidth part identity, BWP ID, and/or at least one component carrier identity, CC ID.

14. The method according to claim 13, wherein,
in a case that the CC ID is a CC ID in a CC list, the m TCI states are applicable to all BWPs on all CCs in the CC list.

15. The method according to any one of claims 1 to 14, wherein,
at least one BWP ID corresponding to the m TCI states is the same as BWP ID(s) corresponding to the n TCI states; or
at least one CC ID corresponding to the m TCI states is the same as CC ID(s) corresponding to the n TCI states; or
the at least one BWP ID and the at least one CC ID corresponding to the m TCI states are the same as the BWP ID(s) and the CC ID(s) corresponding to the n TCI states.

16. A method for TCI state indication, performed by a network device, and comprising:
sending first indication information to a terminal, wherein the first indication information is used for indicating n TCI states, the n TCI states comprise joint TCI state(s) and/or uplink TCI state(s), and n is a positive integer; and
sending second indication information to the terminal, wherein the second indication information is used for indicating transmission parameter(s) of a PUSCH;
wherein the second indication information is further used by the terminal to determine m TCI states, the m TCI states are a subset of the n TCI states, and m is a positive integer not greater than n.

17. The method according to claim 16, wherein the transmission parameter(s) of the PUSCH comprises at least one of:
path loss reference identification(s);
SRS resource indication(s);
information about precoding and layer;
SRS resource set(s); or
power control parameter set(s).

18. The method according to claim 17, wherein specified transmission parameter(s) of the PUSCH comprises one parameter domain, and the m TCI states comprise a first TCI state in the n TCI states, or the m TCI states comprise TCI state(s) corresponding to a first SRS resource set in a plurality of SRS resource sets.

19. The method according to claim 17, wherein specified transmission parameter(s) of the PUSCH comprises x parameter domains, the m TCI states comprise x TCI states in the n TCI states, and x is a positive integer greater than 1.

20. The method according to claim 19, wherein the x TCI states are TCI states respectively corresponding to x SRS resource sets.

21. The method according to any one of claims 16 to 20, wherein the m TCI states are related to PUSCH initial transmission.

22. The method according to claim 16, wherein the second indication information comprises indication domain(s), the m TCI states comprise at least one TCI state in the n TCI states, and the at least one TCI state is determined according to value(s) of the indication domain(s).

23. The method according to claim 22, wherein the indication domain(s) comprises at least one of:
SRS resource set indication(s); or
TCI state indication domain(s).

24. The method according to claim 22 or 23, wherein the m TCI states are related to PUSCH retransmission.

25. The method according to any one of claims 16 to 24, wherein the PUSCH is configured with any one of:
a transmission method based on time division multiplexing, TDM;
a transmission method based on frequency division multiplexing , FDM;
a demodulation reference signal, DMRS, port for at least two code division multiplexing, CDM, groups; and
a transmission method based on a single frequency network, SFN.

26. The method according to claim 16, wherein,
the first indication information is carried in a first media access control control element MAC CE, and the first MAC CE is used for indicating the n TCI states; or
the first indication information is carried in a second MAC CE and first DCI, the second MAC CE is used for indicating n TCI states respectively corresponding to at least two code points in a TCI domain of the first DCI, and the first DCI is used for indicating one of the at least two code points.

27. The method according to claim 26, wherein,
the first indication information comprises identification information corresponding to each TCI state, and the identification information is control resource set pool index(es), or control resource set group identity(s), or control resource set identity(s), or search space set group identity(s), or search space set identity(s), or physical downlink control channel, PDCCH, group identity(s) or PUSCH group identity(s); or
the first indication information comprises the n TCI states, and each TCI state in the n TCI states is provided with a default mapping relationship with the identification information.

28. The method according to any one of claims 16 to 27, wherein,
the second indication information corresponds to at least one bandwidth part identification, BWP ID, and/or at least one component carrier identification, CC ID.

29. The method according to claim 28, wherein,
in a case that the CC ID is a CC ID in a CC list, the m TCI states are applicable to all BWPs on all CCs in the CC list.

30. The method according to any one of claims 16 to 29, wherein,
at least one BWP ID corresponding to the m TCI states is the same as BWP ID(s) corresponding to the n TCI states; or
at least one CC ID corresponding to the m TCI states is the same as CC ID(s) corresponding to the n TCI states; or
the at least one BWP ID and the at least one CC ID corresponding to the m TCI states are the same as the BWP ID(s) and the CC ID(s) corresponding to the n TCI states.

31. An apparatus for transmission configuration indication, TCI, state indication, comprising:
a receiving module, configured to receive first indication information sent by a network device, wherein the first indication information is used for indicating n TCI states, the n TCI states comprise joint TCI state(s) and/or uplink TCI state(s), and n is a positive integer;
wherein the receiving module is further configured to receive second indication information sent by the network device, and the second indication information is used for indicating transmission parameter(s) of a PUSCH; and
a processing module, configured to determine m TCI states according to the second indication information, wherein the m TCI states are a subset of the n TCI states, and m is a positive integer not greater than n.

32. An apparatus for TCI state indication, comprising:
a sending module, configured to send first indication information to a terminal, wherein the first indication information is used for indicating n TCI states, the n TCI states comprise joint TCI state(s) and/or uplink TCI state(s), and n is a positive integer;
wherein the sending module is further configured to send second indication information to the terminal, and the second indication information is used for indicating transmission parameter(s) of a PUSCH; and
the second indication information is further used by the terminal to determine m TCI states, the m TCI states are a subset of the n TCI states, and m is a positive integer not greater than n.

33. A terminal, comprising:
a processor; and
a transceiver, connected to the processor;
wherein the processor is configured to load and execute an executable instruction to implement the method for TCI state indication according to any one of claims 1 to 15.

34. A network device, comprising:
a processor; and
a transceiver, connected to the processor;
wherein the processor is configured to load and execute an executable instruction to implement the method for TCI state indication according to any one of claims 16 to 30.

35. A communication system, comprising a terminal and a network device, wherein the terminal is configured to implement the method for TCI state indication according to any one of claims 1 to 15, and the network device is configured to implement the method for TCI state indication according to any one of claims 16 to 30.

36. A computer-readable storage medium, wherein an executable program code is stored in the readable storage medium, and the executable program code is loaded and executed by a processor to implement the method for TCI state indication according to any one of claims 1 to 30.
